# NOUVEAU FASCICULE DE BREVET EUROPEEN

(11) **EP 2 595 516 B2**
(45) Date de publication et mention de la décision concernant l'opposition: **17.05.2017**
(45) Mention de la délivrance du brevet: 16.04.2014
(21) Numéro de dépôt: 11748467.5
(22) Date de dépôt: 19.07.2011
(51) Int. Cl.: A47J 31/36, A47J 31/06, B65D 85/804

(54) **CAPSULE HERMÉTIQUE ET SYSTÈME POUR BOISSON EXTRAITE SOUS PRESSION**
VERSCHLOSSENE KAPSEL UND SYSTEM ZUR EXTRAKTION EINES GETRÄNKS UNTER DRUCK
SEALED CAPSULE AND SYSTEM FOR A BEVERAGE EXTRACTED UNDER PRESSURE

(30) Priorité: 21.07.2010 FR 1055952
(43) Date de publication de la demande: 29.05.2013
(73) Titulaire: Mocoffee AG, 8008 Zürich (CH)
(72) Inventeur: PASCOT, Jacques, 71510 Saint Léger sur Dheune (FR)
(74) Mandataire: reuteler & cie SA
(86) Numéro de dépôt international: PCT/IB2011/053215
(87) Numéro de publication internationale: WO 2012/011053

(56) Documents cités:
- EP-A1- 1 500 357
- EP-A1- 1 911 380
- EP-A1- 2 151 313
- EP-A1- 2 196 407
- WO-A1-2007/114685

## Description

La présente invention concerne une capsule et un système pour la préparation de boissons extraits sous pression, notamment du café, mais également d'autres boissons telles que du thé, du chocolat chaud, du lait, et des bouillons.

Les capsules hermétiques ont plusieurs avantages : la convenance d'utilisation, la possibilité d'avoir des boissons d'arômes différents en petites portions, la possibilité de pouvoir produire des boissons de consistance et de goût de manière très contrôlée et reproductible, et la possibilité de stocker le produit et de conserver les goûts pendant longtemps.

Certaines des capsules sur le marché contiennent de l'aluminium, ce qui pose un problème environnemental en raison de l'énergie importante nécessaire pour la production de l'aluminium et ensuite du problème du traitement des déchets. D'autres capsules sont faites en matière plastique qui est plus facilement recyclable ou qui peut être brûlée avec le marc du café ou autres substances à extraire après usage, les matières plastiques ayant un bilan écologique plus favorable que l'aluminium. Il y a toutefois un avantage à réduire autant que possible l'utilisation du plastique ou d'autres matériaux d'emballages dans les capsules. Cela devrait être fait toutefois de façon à ne pas nuire à la qualité d'extraction de la boisson.

Dans le cas du café du type espresso on cherche à obtenir une mousse onctueuse, ce qui nécessite entre autres une extraction à haute pression et une bonne irrigation du café à l'intérieur de la capsule. Un des aspects difficile à maîtriser dans un système à capsules est d'assurer une répartition homogène de l'eau sous pression à travers les grains de café et d'éviter la formation des canaux d'écoulement préférentiels. Un passage d'eau non homogène à travers les grains de café ou d'autres substances à extraire réduit le taux d'extraction et réduit aussi le gradient de pression de sorte à ne pas avoir une extraction optimale. Une bonne maîtrise de ces paramètres d'extraction permet d'utiliser une quantité réduite de café (ou autre substance à extraire) comparée à une machine à café classique (c'est-à-dire sans capsules).

Dans les système existants, les capsules sont souvent très petites. Cela suffit pour faire un petit café de type espresso, notamment du fait qu'il est plus facile de maîtriser l'extraction avec un volume et une surface d'extraction qui est plus faible. Plus la capsule est grande, plus il est difficile d'assurer un bon et homogène passage d'eau sous pression à travers le lit de café ou d'autres substances à extraire dans la capsule.

Le document EP-2196407 décrit une capsule pour la préparation d'une boisson.

Un des objectifs de l'invention est de réaliser une capsule hermétique contenant une substance à extraire pour la production de boissons par injection d'eau sous pression dans la capsule, qui utilise peu de matière, et qui permet d'assurer un taux d'extraction élevé et avec une bonne reproductibilité.

Il est avantageux de réaliser une capsule ayant de très bonnes performances à des tailles différentes, par exemple pour des substances à extraire de 5 grams à 20 grams contenues dans la capsule, sans perte de performance.

Il est avantageux de fournir une capsule qui peut être fabriquée en très grande série à très bas coût et qui est très facile à conditionner.

Il est avantageux de fournir une capsule qui peut être aisément traitée après usage, soit pour le recyclage soit pour la production d'énergie par incinération.

Des buts de l'invention sont réalisés par la capsule selon la revendication 1 et le système d'extraction selon la revendication 11 et le système d'extraction selon la revendication 13.

Dans la présente on décrit une capsule hermétique pour la préparation d'une boisson par injection d'eau sous pression, comprenant une paroi latérale, une paroi de fond, et une paroi supérieure renfermant un volume hermétiquement scellé contenant une substance à extraire. La paroi de fond et la paroi latérale sont en une pièce intégrale formant une coque rigide ou semi-rigide, une collerette s'étendant radialement d'une extrémité de la paroi latérale, la paroi supérieure étant sous forme d'une membrane souple fixée à la collerette. La paroi de fond est configurée pour être perforée par des pointes de perforation d'une plaque perforante d'un appareil d'extraction lorsqu'une certaine pression d'eau est atteinte dans la capsule. La paroi de fond comprend une partie principale centrale destinée à être perforée et une partie d'accordéon rattachant solidairement la partie principale centrale à la paroi latérale, la partie d'accordéon comprenant un ou plusieurs plis permettant à la partie centrale de se déplacer vers l'intérieur et vers l'extérieur de la capsule d'une amplitude correspondant à une amplitude nécessaire pour la perforation de la paroi de fond.

La partie principale centrale de la paroi de fond est, en position avant utilisation, positionnée à une distance non nulle d'une ligne de fond de la capsule. La distance entre la partie principale centrale de la paroi de fond et la ligne de fond peut avantageusement se situer entre 0,2 et 1 mm.

La hauteur de la partie d'accordéon peut avantageusement être inférieure à 8 % de la hauteur de la capsule. Le rapport de diamètre entre la paroi de fond et la partie principale centrale de la paroi de fond peut avantageusement se situer entre 0,6 et 0,8. La hauteur de la partie d'accordéon peut se situer avantageusement entre 1 et 3mm. Les plis de la partie d'accordéon peuvent avantageusement avoir des parties de courbures essentiellement circulaires ou elliptiques. La partie d'accordéon peut comprendre un pli orienté depuis une ligne de fond de la capsule vers l'intérieur de la capsule et un deuxième pli radialement intérieur orienté vers l'extérieur de la capsule.

La collerette peut avantageusement comprendre une protubérance annulaire formant une plage radialement intérieure contre laquelle est scellée la paroi supérieure, la protubérance étant disposée radialement intérieure de la périphérie radiale de la collerette. La protubérance peut avoir une hauteur par rapport à la plage essentiellement équivalente à l'épaisseur de la paroi supérieure.

Un système d'extraction de boisson par éjection d'eau sous pression dans la capsule comprend une tête d'injection configurée pour venir en appui contre la paroi supérieure, et une plaque perforante et filtrante destinée à être en appui conte la paroi de fond et de perforer cette paroi de fond lorsque l'eau atteint une certaine pression dans la capsule, la plaque perforante et filtrante et la capsule étant configurées de sorte à ce que les pointes de perforation de la plaque poussent la partie principale centrale de la capsule vers l'intérieur de la capsule lorsque la capsule est mise en place dans le système mais avant injection d'eau sous pression.

La tête d'injection comprend des pointes montées sur une surface convexe, la tête d'injection comprenant en outre un canal d'alimentation d'eau central, les pointes disposées vers la périphérie extérieure de la tête d'injection étant à une hauteur inférieure à la hauteur des pointes disposées vers le centre.

Les points d'injection disposés vers la périphérie peuvent êtres montées sur des bosses en saillie par rapport à la surface convexe.

La tête d'injection peut comprendre un joint élastique annulaire configuré pour venir en appui en partie contre la protubérance de la collerette de la capsule.

D'autres buts et aspects avantageux de l'invention ressortiront des revendications ou de la description détaillé d'une forme d'exécution ci-après en référence aux figures annexées, dans lesquelles :
la figure 1a est une vue en perspective d'une capsule, montrant la paroi de fond, selon une forme d'exécution de l'invention ;
la figure 1b est une vue en coupe de la capsule selon une forme d'exécution de l'invention ;
la figure 1c est une vue en coupe détaillée d'une partie de collerette de la paroi supérieure de la capsule selon la forme d'exécution illustrée ;
la figure 2a est une vue en perspective d'une plaque perforatrice d'un système d'extraction pour capsules selon une forme d'exécution de l'invention ;
la figure 2b est une vue plan du dessus de la plaque perforatrice ;
la figure 2c est une vue en coupe à travers la ligne de 2c-2c de la figure 2b ;
la figure 3a est une vue en perspective d'une tête d'injection d'un système d'extraction selon une forme d'exécution de l'invention ;
la figure 3b est une vue en perspective éclatée de la tête d'injection ;
la figure 3c est une vue plan du dessus de la tête d'injection ;
la figure 3d est une vue en coupe de la tête d'injection selon la ligne 3d-3d de la figure 3c ; et
la figure 4 est une vue en coupe d'une capsule dans un dispositif d'extraction avant injection d'eau.

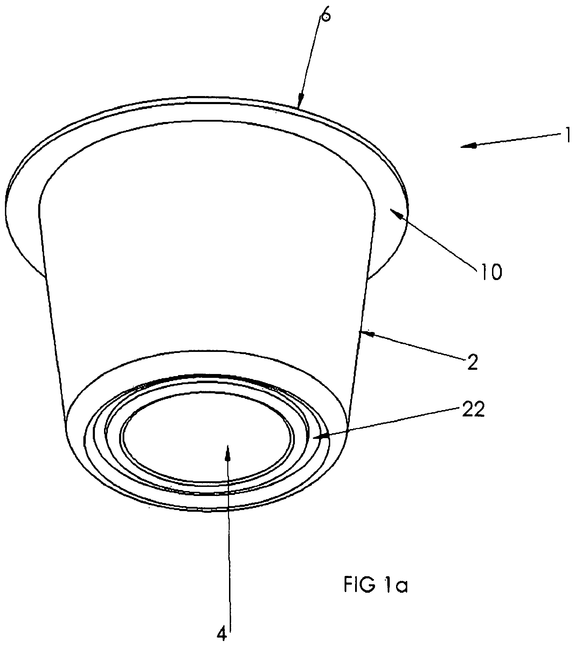

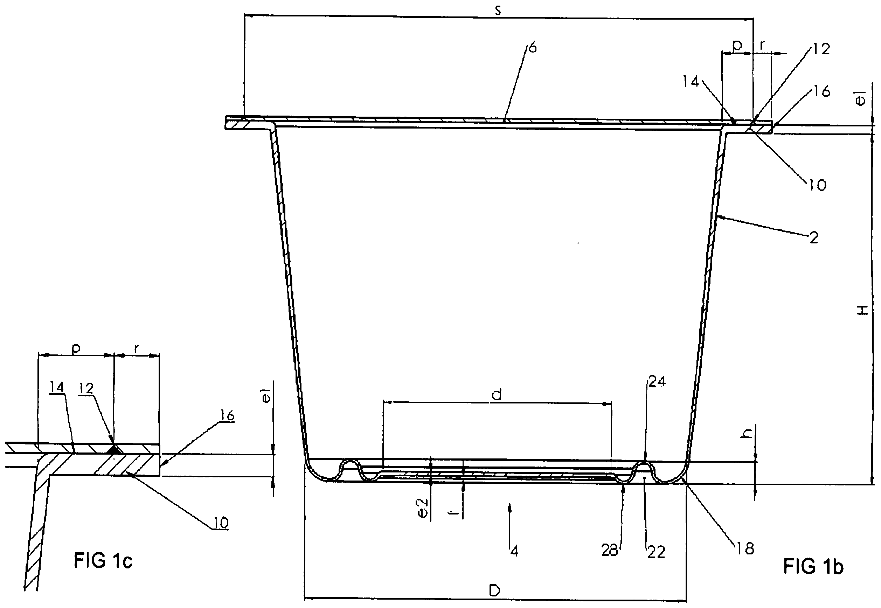

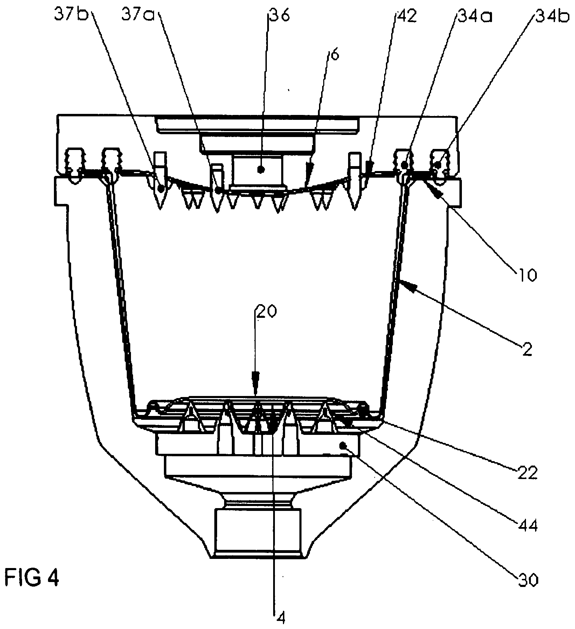

Faisant référence d'abord aux figures 1a à 1c et 4, une capsule hermétique pour la préparation de boissons, notamment de boissons chaudes, par injection d'eau sous pression, comprend une paroi de fond ou d'extraction 4, une paroi latérale 2, une collerette 10, et une paroi supérieure ou d'injection 6. La paroi latérale 2 a une forme légèrement conique et est intégralement formée avec la collerette 10 et la paroi de fond 4, constituant une coque autoportante. Les parois 2, 4, 6 forment un conteneur hermétiquement fermé dans lequel est remplie partiellement ou complètement une substance à extraire, telle que des grains de café, des feuilles de thé, du lait en poudre, du bouillon lyophilisé, ou encore d'autres substances. La paroi supérieure 6 est sous forme d'une feuille ou d'une membrane en matière souple, avantageusement en matière plastique multicouches laminée et éventuellement légèrement tendue fixée à une collerette 10. La membrane supérieure peut avantageusement être fixée à la collerette par soudage, par exemple le thermo soudage ou soudage à ultrasons. La collerette a de préférence une forme annulaire plate avec une épaisseur (e) supérieure à l'épaisseur des parois latérales et de fond 2, 4, ceci pour donner une certaine rigidité à la collerette 10 qui est destiné à être serré entre des mâchoires d'une tête d'injection d'un appareil d'extraction. La collerette fournit également une stabilité et rigidité à la coque formée par les parois latérale et de fond.

Selon un aspect avantageux de l'invention, la collerette comprend une protubérance annulaire 12 définissant une plage intérieure 14, la protubérance 12 ayant une hauteur par rapport à la plage 14 égale ou essentiellement égale à l'épaisseur de la membrane supérieure 6. La périphérie de la membrane 6 est logée dans la plage 14 jusqu'à la protubérance annulaire 12. Selon un aspect de l'invention, la protubérance 12 est positionnée à une certaine distance radiale *(r)* du diamètre extérieur 16 de la collerette. Cette configuration permet d'avoir une finition propre de la liaison entre la membrane supérieure et la collerette, ainsi qu'une excellente étanchéité avec des mâchoires d'une tête d'injection qui prend la collerette en sandwich. Ceci permet de supporter les pressions élevées d'injection sans fuite et de manière reproductible, avec un coût de fabrication faible des capsules.

La coque formée par la paroi latérale, la paroi de fond et la collerette peut avantageusement être formée de matière plastique injectée ou d'une feuille en matière plastique multicouches thermoformée (blow-moulding). La coque peut être formée entièrement en plastique comprenant par exemple du polypropylène, mais l'invention permet également avantageusement de former la coque en une matière autre que du plastique ou d'une combinaison de matériaux tels que des laminés comprenant du plastique. Notamment, d'autres matériaux qui peuvent être utilisés pour former la coque dans le cadre de cette invention sont des matériaux cellulosiques c'est-à-dire des matières formées de fibres semblables aux fibres utilisées dans la production de papier ou de carton. La matière cellulosique peut conférer une certaine rigidité et pourrait être munie d'une couche sur la surface intérieure du conteneur en matière plastique ou de cire alimentaire ou même une très fine couche d'aluminium pour garantir l'étanchéité et réduire la diffusion de molécules à travers la paroi. La matière en fibre cellulosique peut aussi être imbibée ou mélangée à d'autres matériaux tels que des matières plastique pour conférer une certaine élasticité aux parois, cet ajout de matières pouvant être localement distribué aux zones nécessitant certains déplacements élastiques tel que sur la paroi de fond ou sur des parties de la paroi de fond. En d'autres termes, en formant la paroi latérale et la paroi de fond en matière principalement cellulosique ou contenant des fibres cellulosiques ou d'autres matériaux basés sur des fibres végétales on peut avoir une composition de matériaux non homogènes, c'est-à-dire qui varient en fonction de la position sur la capsule.

La paroi de fond 4 est connectée aux parois latérales 2 par une partie de coins 18 arrondis et comprend une partie principale centrale 20 formant une surface d'extraction, et une partie annulaire périphérique en forme d'accordéon 22 reliée intégralement et solidairement avec la paroi latérale 2 par le coin arrondi 18.

La partie annulaire en accordéon 22 comprend au moins un pli 24 orienté vers l'intérieur de la capsule, c'est-à-dire formant une protubérance qui rentre à l'intérieur de la capsule depuis la ligne de fond 26, et de préférence un deuxième pli 28 successif et radialement intérieur du premier pli 24 orienté dans le sens opposé, c'est-à-dire vers l'extérieur de la capsule. Les plis 24 et 28 sont de préférence arrondis avec des parties d'arrondis essentiellement circulaires, ou elliptiques, mais d'autres configurations sont également envisageables dans le cadre de cette invention, par exemples des plis avec des sommets avec un arrondi à faible rayon ou à angle vif. La forme arrondie telle qu'illustrée est avantageuse du point de vue de la fabrication puisqu'elle permet d'obtenir des épaisseurs de parois très régulières et reproductibles en fabrication avec des propriétés optimales d'élasticité et de rigidité pour le positionnement et le déplacement de la paroi de fond.

La partie centrale ou d'extraction 20 peut avantageusement avoir une épaisseur plus importante que la partie d'accordéon 22 et selon une forme d'exécution est disposée à une petite distance F vers l'intérieur de la capsule depuis la ligne de fond 26. La zone d'accordéon 22 permet à la partie centrale 20 de se déplacer élastiquement vers l'intérieur de la capsule ou vers l'extérieur. Un avantage important de cette configuration est de permettre le remplissage de la capsule jusqu'à la collerette si ceci est souhaité pour le produit à extraire et d'enfermer le contenu avec la membrane supérieure. La substance à extraire peut être mise en légère compression à l'intérieur de la capsule, l'élasticité de la paroi de fond et sa capacité de léger déplacement dû à la partie d'accordéon permettant ce remplissage de façon très contrôlée, régulière et reproductible. Un tel remplissage optimum n'est pas possible avec une capsule ayant un fond complètement plat ou une capsule ayant un fond uniquement bombé puisque lors du compactage de la substance dans la coque lors du procédé de fabrication, en enlevant la presse pour placer la membrane, on ne peux éviter soit d'avoir trop de café lorsqu'il décompresse soit de n'en n'avoir pas assez pour le garder serré puisqu'il n'y a aucun ajustement élastique de la capsule.

La hauteur *h* totale de l'accordéon, de sommet à sommet, peut avantageusement être de l'ordre de 3 à 8 % de la hauteur *H* de la capsule, par exemple de 5 à 7 % de la hauteur H de la capsule (c'est-à-dire le rapport *h*/*H* est de l'ordre de 0,05 à 0,07), la distance entre la ligne de fond 26 et le fond de la partie centrale 20 étant de préférence inférieure à 3 % de la hauteur de la capsule. Dans une capsule convenable pour contenir des grains de café pour faire un café de type espresso, la hauteur *h* de la partie d'accordéon peut être de l'ordre de 1,5 à 2mm et la distance *f* entre la partie centrale de la paroi de fond et la ligne de fond 26 étant inférieure à 1 mm, par exemple entre 0,3 et 0,7mm. La partie centrale 20 a de préférence un diamètre d qui est entre 60 et 80 % du diamètre *D* de la paroi de fond, c'est-à-dire que le rapport *d*/*D* est supérieur à 0,6 et inférieur à 0,8.

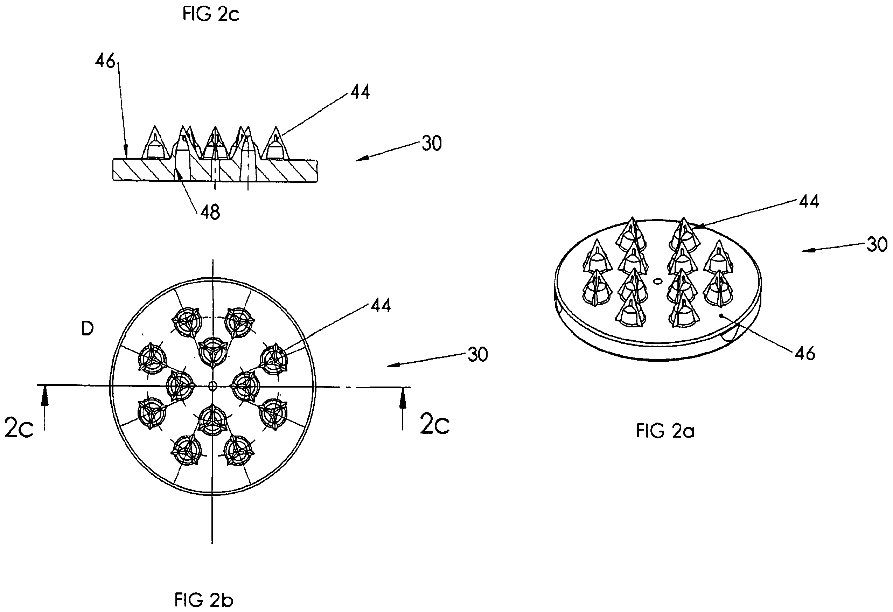

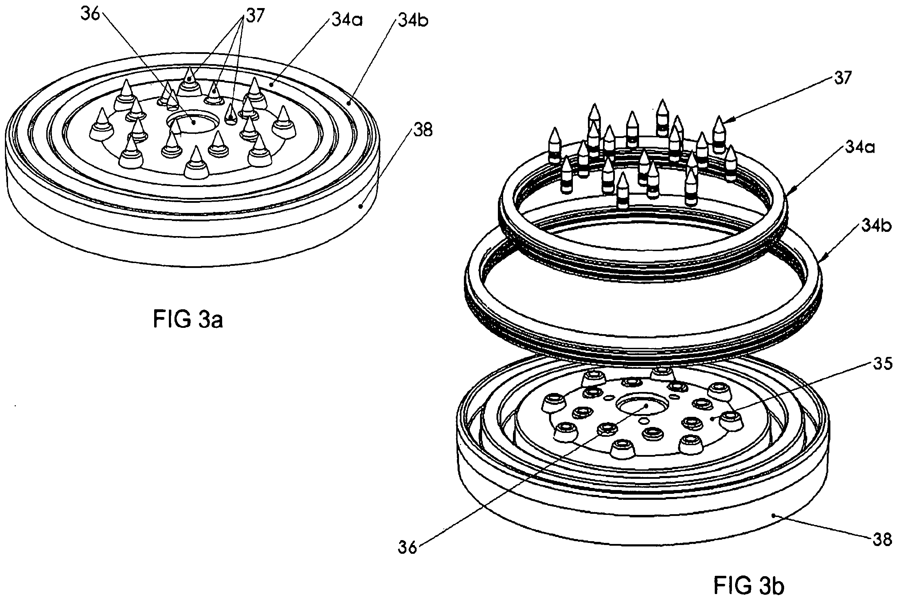

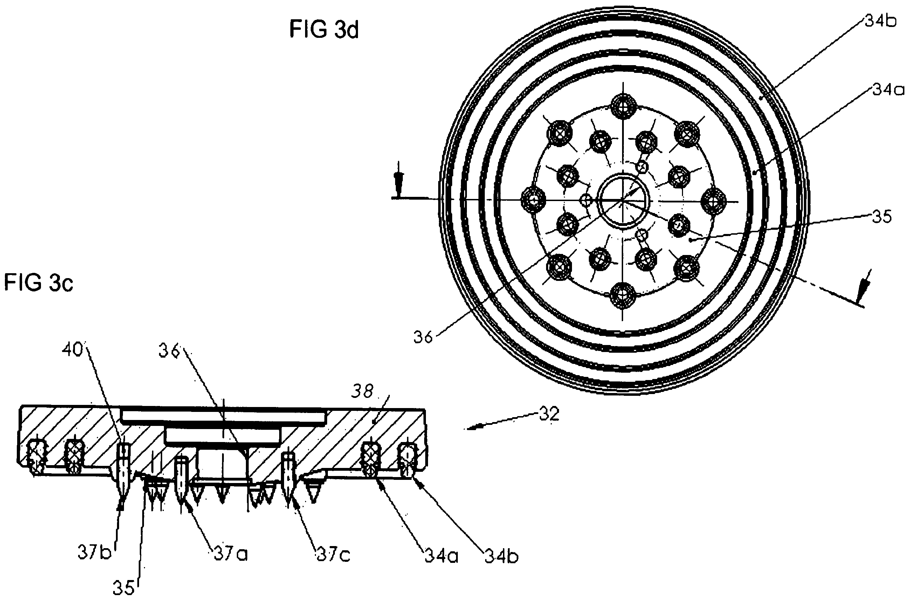

Faisant maintenant référence également aux figures 2a à 2c, 3a à 3c et 4, un appareil d'extraction de boissons pour capsules comprend un porte-capsules dans lequel la capsule est insérée pour l'opération d'extraction, le porte-capsules ayant une plaque perforante et filtrante 30 contre laquelle la paroi de fond de la capsule est positionnée, et une tête d'injection 32 qui vient se plaquer contre la membrane supérieure de la capsule pour l'injection d'eau sous pression dans la capsule. La tête d'injection comprend un ou plusieurs joints annulaires 34a, 34b à sa périphérie qui sont configurés pour être appuyés contre la collerette de la capsule. Un joint peut notamment être en appui contre la protubérance 12 de sorte à être en appui de part et d'autre de la protubérance sur la périphérie de la membrane et le côté radialement extérieur de la protubérance afin d'effectuer une très bonne étanchéité supportant les pressions élevées d'injection. Il est également possible d'avoir deux joints annulaires 34a et 34b, disposés radialement de part et d'autre de la périphérique de la membrane supérieure 6.

La forme de la protubérance annulaire 12 sur la collerette de la capsule est une composante essentielle de l'étanchéité directe (étanchéité emballage) mais aussi indirect (verrouillage extraction). En effet, la forme triangulaire permet de déclencher un échauffement local important. Ce dernier va engendrer une soudure précise et homogène. La soudure crée une zone plane et régulière (forme de la tête de soudure). Le verrouillage du bloc comprime le joint injecteur sur cette zone interface.

Dans la forme d'exécution illustrée, la tête d'injection a un corps de base 38 avec une surface d'appui légèrement convexe 35, un canal central 36 pour l'alimentation d'eau en pression et autour du canal d'alimentation, répartie sur la surface convexe, une pluralité de pointes de perforation 37. Dans la forme d'exécution illustrée, les pointes de perforation sont des pièces fabriquées séparément et qui sont assemblées dans le corps de base 38 de la tête d'injection 32. Avantageusement, la hauteur des pointes de perforation 37a disposées proches du canal d'alimentation d'eau 36, c'est-à-dire vers le centre de la tête d'injection, ont une hauteur légèrement supérieure aux pointes 37b situées vers la périphérie radiale extérieure de la tête d'injection. La différence de hauteur entre les pointes 37a radialement vers l'intérieur et les pointes 37b radialement vers l'extérieur est toutefois moins prononcée que la différence de hauteur due à la courbure de la surface convexe 35 de la surface d'injection. A cet effet, les pointes 37 sont fabriquées séparément ont des formes identiques mais sont logées dans des trous 40 du corps 38 de la tête d'injection à la hauteur voulue. Afin que les pointes radialement extérieures 37b puissent être surélevées par rapport à la surface convexe 35, autour du trou 40 il y a des bosses 42 pour un ancrage des pointes à une hauteur surélevée par rapport à la surface convexe 35.

La flexion élastique de la membrane supérieure 6 vers l'intérieur de la capsule lorsqu'elle est appuyée contre la tête d'injection est plus importante au centre que vers le bord radial, la forme convexe de la surface de la tête d'injection étant adapté à la flexion de la membrane. Malgré la hauteur légèrement inférieure des pointes périphériques 37b par rapport aux pointes centrales 37a, la position radial des points périphériques 37b est configuré pour pénétrer plus dans la membrane 6, tenant compte de sa flexion élastique, que les pointes centrales 37a. Ceci combiné avec l'appui des bosses 42 sur la membrane permet d'assurer une bonne répartition d'eau vers les zones périphériques et d'assurer une répartition d'eau s'écoulant à travers la membrane et dans le lit de substance contenu dans la capsule avec un flux homogène tenant compte de la courbure de la membrane élastique appuyée contre la substance à l'intérieur de la capsule. A cet égard, après perforation de la membrane par la tête d'injection, lorsque la capsule est placée dans l'appareil prêt à l'usage, l'amenée d'eau par le canal central sous pression pousse la membrane vers la substance à extraire vers l'intérieur de la capsule et dégage la membrane des pointes de perforation, la membrane agissant comme un régulateur de pression.

Lorsque la capsule est placée dans l'appareil en position prête à usage, avec le porte capsules fermé, les pointes de perforation 44 de la plaque perforante et filtrante 30 appuient contre la partie centrale 20 de la capsule et le poussent élastiquement vers l'intérieur de la capsule. La capsule est configurée avec la plaque perforante et filtrante pour que la paroi de fond soit en appui contre les pointes 44 de la plaque filtrante avant l'injection d'eau. Un avantage de la configuration de la paroi de fond selon l'invention est que la partie centrale 20 se déplace essentiellement parallèlement vers l'intérieur de sorte à ce qu'elle reste essentiellement plane en appui contre les sommets des pointes de perforation 44. Lorsque l'eau sous pression est injectée dans la capsule, à un certain seuil de pression la partie centrale 20 de la paroi de fond se déplace vers la surface de fond 46 de la plaque filtrante et les pointes 44 perforent le fond de la capsule pour laisser la boisson s'écouler à travers les canaux 48 prévus dans la plaque perforante et filtrante 30. La partie d'accordéon 22 de la paroi de fond permet avantageusement le déplacement de la partie centrale 20 destinée à être perforée de se déplacer sans qu'il y ait une tension latérale de sorte à ce qu'il n'y ait aucune tension latérale sur la paroi de fond qui inhiberait son déplacement uniforme vers le fond de la plaque perforante et filtrante. En d'autres termes, la partie centrale 20 de la paroi de fond est libre de se déplacer sans contraintes latérales sous l'effet de la pression répartit uniformément sur le fond de sorte à assurer une perforation très régulière sur toute la partie centrale 20 destinée à être perforée. Cela permet d'assurer un écoulement très homogène et bien réparti dans le lit de substance contenu dans la capsule puisque l'on évite la perforation de certains trous avant les autres qui créerait une baisse de pression et la formation de canaux d'écoulement préférentiels.

Dans le cadre de l'invention, il est possible d'avoir une partie d'accordéon qui comprend plus de plis que dans la forme d'exécution illustrée.

Le rapport de proportion entre le diamètre et la longueur de la capsule est un élément important de l'invention. Plus la capsule est allongée, plus la pression d'extraction (étroitement lié au débit d'écoulement) sera stable et élevée (extraction optimale). Effectivement, la distribution d'injection doit limiter au maximum les chemins préférentiels afin d'apporter une homogénéité d'extraction. La distribution (taille) des particules joue aussi un rôle.

La paroi de fond de la capsule possède une grande marge de déformation, ce qui permet avantageusement d'absorber et de gérer des facteurs de pression lors du conditionnement.

La distribution des douze pointes de la plaque filtrante est aussi un aspect avantageux. Elles sont disposées de préférence de manière à représenter quatre triangles équilatéraux. L'appui sur le fond de la capsule est homogène afin d'obtenir une perforation sous pression précise et simultanée. Pour cela, l'épaisseur de la partie principale centrale (20) destinée à être perforée est régulière.

La capsule peut avoir en outre une couche d'EVOH permettant de substituer l'aluminium, elle réduit la diffusion de molécule (oxygène) au travers du multicouche polypropylène.

## Revendications

1. Capsule hermétique pour la préparation d'une boisson par injection d'eau sous pression, comprenant une paroi latérale (2), une paroi de fond (4), et une paroi supérieure (6) renfermant un volume hermétiquement scellé contenant une substance à extraire, la paroi de fond et la paroi latérale étant en une pièce intégrale formant une coque rigide ou semi-rigide, une collerette (10) s'étendant radialement d'une extrémité de la paroi latérale, la paroi supérieure étant sous forme d'une membrane souple fixée à la collerette, la paroi de fond étant configurée pour être perforée par des pointes de perforation d'une plaque perforante lorsqu'une certaine pression d'eau est atteinte dans la capsule, la paroi de fond comprenant une partie principale centrale (20) destinée à être perforée et une partie d'accordéon (22) rattachant solidairement la partie principale centrale à la paroi latérale, la partie d'accordéon comprenant plusieurs plis (18,24,28) permettant à la partie centrale de se déplacer vers l'intérieur et vers l'extérieur de la capsule d'une amplitude correspondant à une amplitude nécessaire pour la perforation de la paroi de fond sans tension latérale dans la paroi de fond, **caractérisée en ce que** le rapport de diamètre (*d*/*D*) entre la paroi de fond et la partie principale centrale (20) de la paroi de fond se situe entre 0,6 et 0,8.

2. Capsule selon la revendication 1 **caractérisée en ce que** une hauteur (*h*) de la partie d'accordéon est inférieure à 8 % de la hauteur (*H*) de la capsule.

3. Capsule selon les revendications 1 et 2, **caractérisée en ce que** la partie principale centrale (20) de la paroi de fond est essentiellement plane.

4. Capsule selon l'une des revendications précédentes, **caractérisée en ce que** la partie principale centrale (20) de la paroi de fond est, en position avant utilisation, positionnée à une distance (*f*) non nulle d'une ligne de fond (26) de la capsule.

5. Capsule selon la revendication précédente, **caractérisée en ce que** la distance (*f*) entre la partie principale centrale de la paroi de fond et la ligne de fond se situe entre 0,2 et 1mm.

6. Capsule selon l'une des revendications précédentes, **caractérisée en ce que** la hauteur de la partie d'accordéon se situe entre 1 et 3mm.

7. Capsule selon l'une des revendications précédentes, **caractérisée en ce que** les plis de la partie d'accordéon ont des parties de courbures essentiellement circulaires ou elliptiques.

8. Capsule selon l'une des revendications précédentes, **caractérisée en ce que** la partie d'accordéon comprend un pli (24) orienté depuis une ligne de fond (26) de la capsule vers l'intérieur de la capsule et un deuxième pli radialement intérieur orienté vers l'extérieur de la capsule.

9. Capsule selon l'une des revendications précédentes, **caractérisée en ce que** la collerette comprend une protubérance annulaire (12) formant une plage radialement intérieure (14) contre laquelle est scellée la paroi supérieure, la protubérance (12) étant disposée radialement intérieure de la périphérie radiale (16) de la collerette.

10. Capsule selon l'une des revendications précédentes, **caractérisée en ce que** la protubérance (12) a une hauteur par rapport à la plage (14) essentiellement équivalente à l'épaisseur de la paroi supérieure.

11. Système d'extraction de boisson par injection d'eau sous pression comprenant une capsule selon l'une des revendications précédentes, une tête d'injection configurée pour venir en appui contre la paroi supérieure, et une plaque perforante et filtrante (30) destinée à être en appui conte la paroi de fond et de perforer cette paroi de fond lorsque l'eau atteint une certaine pression dans la capsule, la plaque perforante et filtrante et la capsule étant configurées de sorte à ce que les pointes de perforation (44) de la plaque poussent la partie principale centrale de la capsule vers l'intérieur de la capsule lorsque la capsule est mise en place dans le système mais avant injection d'eau sous pression.

12. Système selon la revendication précédente **caractérisée en ce que** la tête d'injection comprend des pointes (37) montées sur une surface convexe (35), les pointes (37b) disposées vers la périphérie extérieure de la tête d'injection étant à une hauteur inférieure à la hauteur des pointes (37a) disposées vers le centre.

13. Système d'extraction de boisson par injection d'eau sous pression dans une capsule contenant une substance à extraire, le système comprenant une tête d'injection configurée pour venir en appui contre une paroi supérieure de la capsule, et une plaque perforante et filtrante (30) destinée à être en appui contre une paroi de fond de la capsule et configurée pour perforer cette paroi de fond lorsque l'eau atteint une certaine pression dans la capsule, la plaque perforante et filtrante et la capsule étant configurées de sorte à ce que les pointes de perforation (44) de la plaque poussent la partie principale centrale de la capsule vers l'intérieur de la capsule lorsque la capsule est mise en place dans le système mais avant injection d'eau sous pression, **caractérisé en ce que** la tête d'injection comprend des pointes (37) montées sur une surface convexe (35), les pointes (37b) disposées vers une périphérie extérieure de la tête d'injection étant à une hauteur inférieure à la hauteur des pointes (37a) disposées vers le centre et **en ce que** les points d'injection disposés vers la périphérie sont montées sur des bosses (42) en saillie par rapport à la surface convexe.

14. Système selon l'une des trois revendications précédentes **caractérisée en ce que** la tête d'injection comprend un joint élastique annulaire configuré pour venir en appui en partie contre une protubérance (12) de la collerette de la capsule.

15. Système selon l'une des quatre revendications précédentes **caractérisée en ce que** la tête d'injection comprend un canal d'alimentation d'eau (36) central.

## Patentansprüche

1. Verschlossene Kapsel für die Zubereitung eines Getränks durch Einspritzen von Wasser unter Druck, die eine Seitenwand (2), eine Bodenwand (4) und eine obere Wand (6), die ein hermetisch verschlossenes Volumen einschließen, das eine zu extrahierende Substanz enthält, umfasst, wobei die Bodenwand und die Seitenwand ein nahtloses Teil sind, das eine steife oder halbsteife Schale bildet, wobei sich ein Kragen (10) radial von einem Ende der Seitenwand erstreckt, wobei die obere Wand in Form einer am Kragen befestigten elastischen Membran ist, wobei die Bodenwand konfiguriert ist, um von Perforationsspitzen einer Perforationsplatte durchstoßen zu werden, wenn in der Kapsel ein bestimmter Druck erreicht ist, wobei die Bodenwand einen zentralen Hauptteil (20), der dazu bestimmt ist, durchstoßen zu werden, und einen Ziehharmonikateil (22), der den zentralen Hauptteil mit der Seitenwand verbindet, umfasst, wobei der Ziehharmonikateil mehrere Falten (18, 24, 28) umfasst, die es dem zentralen Teil erlauben, sich nach innen und nach außen der Kapsel in einer Amplitude zu verlagern, die einer Amplitude entspricht, die für das Durchstoßen der Bodenwand ohne Seitenspannung in der Bodenwand notwendig ist, **dadurch gekennzeichnet, dass** sich das Durchmesserverhältnis (*d*/*D*) zwischen der Bodenwand und dem zentralen Hauptteil (20) der Bodenwand zwischen 0,6 und 0,8 bewegt.

2. Kapsel nach Anspruch 1, **dadurch gekennzeichnet, dass** eine Höhe (*h*) des Ziehharmonikateils kleiner als 8 % der Höhe (*H*) der Kapsel ist.

3. Kapsel nach den Ansprüchen 1 und 2, **dadurch gekennzeichnet, dass** der zentrale Hauptteil (20) der Bodenwand im Wesentlichen eben ist.

4. Kapsel nach einem der vorangehenden Ansprüche, **dadurch gekennzeichnet, dass** sich der zentrale Hauptteil (20) der Bodenwand in Position vor der Benutzung in einem Abstand (*f*) ungleich null von einer Bodenlinie (26) der Kapsel befindet.

5. Kapsel nach vorangehendem Anspruch, **dadurch gekennzeichnet, dass** der Abstand (*f*) zwischen dem zentralen Hauptteil der Bodenwand und der Bodenlinie zwischen 0,2 und 1 mm beträgt.

6. Kapsel nach einem der vorangehenden Ansprüche, **dadurch gekennzeichnet, dass** die Höhe des Ziehharmonikateils zwischen 1 und 3 mm beträgt.

7. Kapsel nach einem der vorangehenden Ansprüche, **dadurch gekennzeichnet, dass** die Falten des Ziehharmonikateils im Wesentlichen kreisrunde oder elliptische Krümmungsabschnitte haben.

8. Kapsel nach einem der vorangehenden Ansprüche, **dadurch gekennzeichnet, dass** das Ziehharmonikateil eine Falte (24) umfasst, die von einer Bodenlinie (26) der Kapsel in die Kapsel zeigt und eine radial innere zweite Falte, die nach außerhalb der Kapsel zeigt.

9. Kapsel nach einem der vorangehenden Ansprüche, **dadurch gekennzeichnet, dass** der Kragen einen ringförmigen Vorsprung (12) umfasst, der einen radial inneren Bereich (14) bildet, an dem die obere Wand befestigt ist, wobei der Vorsprung (12) radial innen vom radialen Umfang (16) des Kragens angeordnet ist.

10. Kapsel nach einem der vorangehenden Ansprüche, **dadurch gekennzeichnet, dass** der Vorsprung (12) im Verhältnis zum Bereich (14) eine Höhe hat, die im Wesentlichen der Dicke der oberen Wand entspricht.

11. System zur Extraktion eines Getränks durch Einspritzen von Wasser unter Druck, das eine Kapsel nach einem der vorangehenden Ansprüche, einen Einspritzkopf, der konfiguriert ist, um sich auf der oberen Wand abzustützen, und eine Perforations- und Filtrationsplatte (30), die dazu bestimmt ist, sich auf der Bodenwand abzustützen und diese Bodenwand zu durchstoßen, wenn das Wasser in der Kapsel einen bestimmten Druck erreicht, umfasst, wobei die Perforations- und Filtrationsplatte und die Kapsel derart konfiguriert sind, dass die Perforationsspitzen (44) der Platte den zentralen Hauptteil der Kapsel in die Kapsel drücken, wenn die Kapsel in dem System platziert ist, aber vor dem Einspritzen von Wasser unter Druck.

12. System nach vorangehendem Anspruch, **dadurch gekennzeichnet, dass** der Einspritzkopf auf einer konvexen Fläche (35) montierte Spitzen (37) umfasst, wobei die in Richtung des äußeren Umfangs des Einspritzkopfs angeordneten Spitzen (37b) eine geringere Höhe haben als die in Richtung des Zentrums angeordneten Spitzen (37a).

13. System zur Extraktion eines Getränks durch Einspritzen von Wasser unter Druck in eine Kapsel, die eine zu extrahierende Substanz enthält, wobei das System einen Einspritzkopf, der konfiguriert ist, um sich auf einer oberen Wand der Kapsel abzustützen, und eine Perforations- und Filtrationsplatte (30) umfasst, die dazu bestimmt ist, sich auf einer Bodenwand der Kapsel abzustützen und konfiguriert, um diese Bodenwand zu durchstoßen, wenn das Wasser in der Kapsel einen bestimmten Druck erreicht, wobei die Perforations- und Filtrationsplatte und die Kapsel derart konfiguriert sind, dass die Perforationsspitzen (44) der Platte den zentralen Hauptteil der Kapsel in die Kapsel drücken, wenn die Kapsel in dem System platziert ist, aber vor dem Einspritzen von Wasser unter Druck, **dadurch gekennzeichnet, dass** der Einspritzkopf auf einer konvexen Fläche (35) montierte Spitzen (37) umfasst, wobei die in Richtung des äußeren Umfangs des Einspritzkopfs angeordneten Spitzen (37b) eine geringere Höhe haben als die in Richtung des Zentrums angeordneten Spitzen (37a), und dass in Richtung des Umfangs angeordneten Perforationsspitzen auf Wülsten (42) montiert sind, die im Verhältnis zu der konvexen Fläche hervorstehen.

14. System nach einem der drei vorangehenden Ansprüche, **dadurch gekennzeichnet, dass** der Einspritzkopf eine ringförmige elastische Dichtung umfasst, die konfiguriert ist, um sich teilweise auf einem Vorsprung (12) des Kragens der Kapsel abzustützen.

15. System nach einem der vier vorangehenden Ansprüche, **dadurch gekennzeichnet, dass** der Einspritzkopf einen zentralen Wasserversorgungskanal (36) umfasst.

## Claims

1. A hermetic capsule for preparing a beverage by injection of pressurized water, comprising a side wall (2), a bottom wall (4) and an upper wall (6) enclosing a hermetically sealed volume containing a substance to be extracted, the bottom wall and the side wall being in an integral part forming a rigid or semi-rigid shell, a collar (10) extending radially from one end of the side wall, the upper wall being in the form of a flexible membrane attached to the collar, the bottom wall being configured so that it can be perforated by perforating sharp tips of a perforating plate when a certain water pressure is reached inside the capsule, the bottom wall comprising a main central part (20) intended to be perforated and an accordion part (22) securing the main central part to the side wall, the accordion part comprising a plurality of folds (18,24,28) enabling the central part to move towards the inside and outside of the capsule by an amplitude corresponding to an amplitude needed for perforation of the bottom wall without any side tension in the bottom wall, **characterized in that** the diameter ratio (*d*/*D*) between the bottom wall and the main central part (20) of the bottom wall lies between 0.6 and 0.8.

2. The capsule according to claim 1, **characterized in that** a height (*h*) of the accordion part is less than 8 % of the height (*H*) of the capsule.

3. The capsule according to claims 1 and 2, **characterized in that** the main central part (20) of the bottom wall is essentially planar.

4. The capsule according to one of the preceding claims, **characterized in that** the main central part (20) of the bottom wall, in the position before use, lies at a nonzero distance (*f*) from a bottom line (26) of the capsule.

5. The capsule according to the preceding claim, **characterized in that** the distance (*f*) between the main central part of the bottom wall and the bottom line is between 0.2 and 1 mm.

6. The capsule according to one of the preceding claims, **characterized in that** the height of the accordion part is between 1 and 3 mm.

7. The capsule according to one of the preceding claims, **characterized in that** the folds of the accordion part have essentially circular or elliptical curved parts.

8. The capsule according to one of the preceding claims, **characterized in that** the accordion part comprises a fold (24) oriented from a bottom line (26) of the capsule towards the inside of the capsule, and a second radially inner fold oriented towards the outside of the capsule.

9. The capsule according to one of the preceding claims, **characterized in that** the collar comprises an annular projection (12) forming a radially inner surface (14) against which the upper wall is sealed, the projection (12) being arranged radially inside the radial periphery (16) of the collar.

10. The capsule according to one of the preceding claims, **characterized in that** the projection (12) has a height relative to the surface (14) that is essentially equivalent to the thickness of the upper wall.

11. A beverage extraction system via injection of pressurized water comprising a capsule according to one of the preceding claims, an injection head configured to bear against the upper wall, and a perforating, filtering plate (30) intended to bear against the bottom wall and to perforate this bottom wall when the water reaches a certain pressure in the capsule, the perforating, filtering plate and the capsule being configured so that the perforating tips (44) of the plate push the main central part of the capsule towards the inside of the capsule when the capsule is placed in position in the system but before the injection of pressurized water.

12. The system according to the preceding claim, **characterized in that** the injection head comprises sharp tips (37) mounted on a convex surface (35), the sharp tips (37b) arranged towards the outer periphery of the injection head being at a lower height than the height of the sharp tips (37a) arranged towards the centre.

13. A beverage extraction system via injection of pressurized water into a capsule containing a substance to be extracted, the system comprising an injection head configured to bear against an upper wall of the capsule, and a perforating, filtering plate (30) intended to bear against a bottom wall of the capsule and configured to perforate this bottom wall when the water reaches a certain pressure in the capsule, the perforating, filtering plate and the capsule being configured so that the perforating tips (44) of the plate push the main central part of the capsule towards the inside of the capsule when the capsule is placed in position in the system but before the injection of pressurized water, **characterized in that** the injection head comprises sharp tips (37) mounted on a convex surface (35), the sharp tips (37b) arranged towards an outer periphery of the injection head being at a lower height than the height of the tips (37a) arranged towards the centre and **in that** the injection tips arranged towards the periphery are mounted on projecting bumps (42) projecting from the convex surface.

14. The system according to one of the three preceding claims, **characterized in that** the injection head comprises an annular elastic seal configured partly to bear against a projection (12) of the capsule collar.

15. The system according to one of the four preceding claims, **characterized in that** the injection head comprises a central water feeding channel (36).
